# EUROPEAN PATENT APPLICATION

(11) **EP 2 781 476 A1**
(43) Date of publication of application: **24.09.2014**
(21) Application number: 14160727.5
(22) Date of filing: 19.03.2014
(51) Int. Cl.: B65G 53/52, E04G 21/04, F16L 57/06

(54) **Method to make a curved tubular element to convey abrasive materials such as concrete or suchlike, and curved tubular element thus obtained**

(30) Priority: 19.03.2013 IT MI20130415
(71) Applicant: CIFA SpA, 20030 Senago (MI) (IT)
(72) Inventor: Ferrè, Fabio, 23017 Morbegno (SO) (IT); Mottarella, Domenico, 23013 Cosio Valtellino (SO) (IT); Cortellini, Mauro Marco, 20089 Rozzano (MI) (IT)
(74) Representative: Petraz, Gilberto Luigi

(57) **Abstract**

Method to make a curved tubular element comprising obtaining a first external curved tubular component (12), and a second internal curved component (15) made of a material with a greater resistance to wear than the first external curved tubular component (12), and having a cross section such as to cover at least part of the internal surface (13) of the first external curved tubular component (12). The method provides to make the first external curved tubular component (12) in at least two parts (11a, 11b) in which each of the parts has a cross section which is a respective portion of the complete tubular section of the first external curved tubular component (12); to bring the at least two parts (11a, 11b) near each other along respective connection edges (18a, 18b), disposing the second internal curved component (15) internally in contact with at least one of the two parts (11a, 11b); to weld the at least two parts (11a, 11b) to define the first external curved tubular component (12) and to enclose the second internal curved component (15) inside it.

## Description

### FIELD OF THE INVENTION

The present invention concerns a method to make a curved tubular element, suitable to be connected with other tubular elements, rectilinear or curved, to define a pipe for conveying concrete or other abrasive material in the fluid state. In particular, the field of application of the present invention is the building trade, while it remains true that the curved tubular element according to the present invention can also be used in other industrial fields.

### BACKGROUND OF THE INVENTION

In the field of building constructions it is known to use metal tubular elements of the modular type, which are connected to each other to obtain a pipe that allows to transfer concrete from a container, for example a truck mixer, to a casting zone, by means of pumping devices.

The tubular elements are connected to each other on each occasion depending on the characteristics of the zone to be reached. In particular, to allow a change in direction, rectilinear tubular elements disposed in sequence are connected by means of curved tubular elements, or connection elements, which have standardized angles of longitudinal development, such as for example 15°, 30°, 45°, 60° or 90°.

Compared with rectilinear ones, curved tubular elements are more subject to abrasive action on the internal surfaces, mainly due to the action of the centrifugal force that the concrete exerts on the internal surfaces, in particular on the part that is external during use, that is, along the extrados.

In particular, along the extrados of the curved tubular element the speed of conveyance of the concrete is much higher than the speed along the intrados, that is, in the zone with a smaller radius of curvature. This leads to greater wear on the internal surface of the extrados.

A curved tubular element is known from the European patent EP-A-1873440, in the name of the present Applicant, which comprises a first tubular part, more external, made of a material having great mechanical resistance, and a second tubular part, disposed inside the first and made of a material with great resistance to wear. In other words, the curved tubular element consists of two curved tubes, of different material, one inside the other.

In this document, in order to clamp the two tubular parts to each other, spacer elements are made on the external surface of the second tubular part in proximity to its extrados, which keep it separated from the first tubular part so as to create a containing chamber which, during the first use of the curved tubular element, is filled with concrete; once the concrete has set, it makes the two parts solid with each other. This known curved tubular element has the disadvantage, however, that it is rather complex to make, is very heavy and has a high cost.

Furthermore, given the curved conformation of the tubular element, it is difficult to introduce the second tubular part inside the first tubular part because of the need to force the parts in the coupling step.

In order to reduce the insertion force required, in some known solutions, it is provided to make the second tubular part in sectors with a circumferential extension which are inserted individually into the first tubular part and disposed near each other.

However, this known solution does not completely eliminate these disadvantages, and makes the element complex to produce; moreover, another step of clamping the second tubular part to the first is required.

A method is also known to make a curved tubular element, described in document WO 2012/017286 A1, which comprises using a curved anti-wear insert which during use is disposed inside the curved tubular element and through which the abrasive material to be transferred passes.

When the curved tubular element is made, the curved anti-wear insert is disposed inside a mold and molten steel is cast around its peripheral surface, in order to make an external jacket which, once solidified, forms the external part of the tubular element. However, this method too is complex and requires dedicated equipment and long execution times.

Document WO 2012/017286 A1 discloses a method to produce curved tubes having a double thickness, where the inner thickness has characteristics of wear resistance and the outer thickness has a containment function. The inner thickness is connected to the outer thickness by-means of a co-fusion process in a mold. More precisely, the tube can be made in two halves (cut along a plane containing the axis along which the tube develops); each half can be made by two thicknesses: one inner thickness, resistant to wear and one outer thickness, with a containment function. The two halves, obtained by a fusion mold (co-fused curve), can be joined by means of welding along the edges. In a possible solution, one half of the tube can be made by a double thickness in which the wear resistant part has a width that can be lower than 180°, whereas the second half can be made with a single thickness, namely it can be without the inner wear resistant part.

Document US 6.799.608 B1 discloses a method for providing greater resistance to a tube. The resistance is obtained by means of a thermal treatment with fusion of alloys. In order to obtain this effect, a tube is firstly cut in two halves and the inner part of the two halves is subjected to a deposition thermal treatment. The deposited material has a thickness between 0,7 and 1,5 mm. Finally, the two treated halves, both having the inner (treated) part resistant to wear and the conventional outer part, are welded each other so as to obtain a monolithic tube. In this solution there is not provided an inner tube and the welding joins the two halves of the tube previously subjected to the treatment.

One purpose of the present invention is to make a curved tubular element for conveying concrete or other abrasive materials in the fluid state which is reliable, simple to make, relatively light and economical.

Another purpose of the present invention is to perfect a method to make a curved tubular element that is simple and rapid.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a method to make a curved tubular element for conveying abrasive materials, such as concrete or suchlike, comprises making, in separate components, a first external curved tubular component, and a second internal curved component. The second internal curved component, or anti-wear insert, is made of a material with a greater resistance to wear than that of the first external curved tubular component, and has a cross section such as to cover at least part of the internal surface of the first external curved tubular component, defining by itself or together with part of the internal surface of the first external curved tubular component, the cavity through which the abrasive material passes.

According to one feature of the present invention, the method comprises:
- making the first external curved tubular component in at least two parts, which define together, when coupled with each other, the entire first external curved tubular component, in which each of the parts has a cross section which is a respective portion of the complete tubular section of the first external curved tubular component,
- bringing the at least two parts near each other along respective connection edges, disposing the second internal curved component, obtained in a distinct and autonomous production process and in a monolithic form, inside and in contact with at least one of the two parts,
- welding the at least two parts of the first external curved tubular component along the respective connection edges to define the first external curved tubular component and to enclose the second internal curved monolithic component inside it.

In this way it is therefore possible to obtain, simply and quickly, a curved tubular element that is light and has a long working life.

With the method according to the present invention, it is possible to make separately, simply and without technological constraints, both the parts which during use define the first external curved tubular component and also the second internal curved component, in their definitive form and without requiring further work to complete them, and having the required mechanical characteristics and shape.

Once the two parts that make up the first external curved tubular component have been welded together, the second internal curved component remains constrained inside it, and can no longer move.

In one form of embodiment, it is provided that the second internal curved component has a tubular cross section, mating in shape with the section of the internal surface of the first external curved tubular component. In another form of embodiment, the second internal curved component has a cross section such as to cover only part of the section of the internal surface of the first external curved tubular component.

The present invention also concerns the curved tubular element obtained with the method described above.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a perspective view of a curved tubular element according to the present invention;
- fig. 2 is an exploded view of the curved tubular element in fig. 1;
- fig. 3 shows a curved tubular element according to the invention during the production step;
- fig. 4 shows an enlarged detail of fig. 3;
- fig. 5 is a section view of a first variant of the curved tubular element in fig. 1;
- fig. 6 is a section view of a second variant of the curved tubular element in fig. 1;
- fig. 7 is a section view of a third variant of the curved tubular element in fig. 1;
- fig. 8 is a section view of a fourth variant of the curved tubular element in fig. 1.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

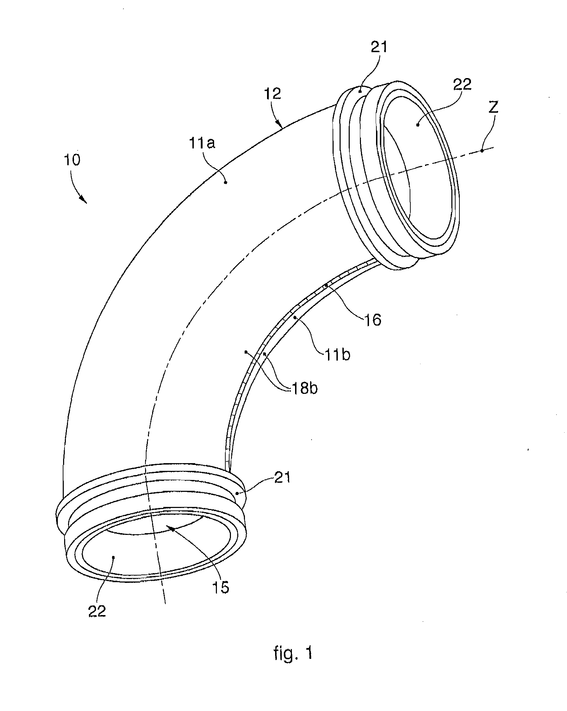

With reference to fig. 1, a curved tubular element 10 for conveying abrasive materials such as concrete or suchlike, according to the present invention in this case comprises two parts 11a and 11b, or shells, which when solidly coupled with each other define a first external component 12 with a tubular section and a curved extension along a curved axis Z, in this case the arc of a circle, inside which a second internal curved component or anti-wear insert 15 is disposed.

In particular, each of the parts 11a, 11b has a cross section that is a respective portion of the tubular section of the first external component 12, and develops longitudinally along the curved axis Z. The two parts 11a and 11b are reciprocally connected along respective longitudinal edges 18a, 18b by welding, to obtain respective welding beads 16.

The parts 11a and 11b can be welded by means of a welding method using oxyacetylene, electrode, submerged arc, of the MIG, MAG, TIG type, or plasma welding.

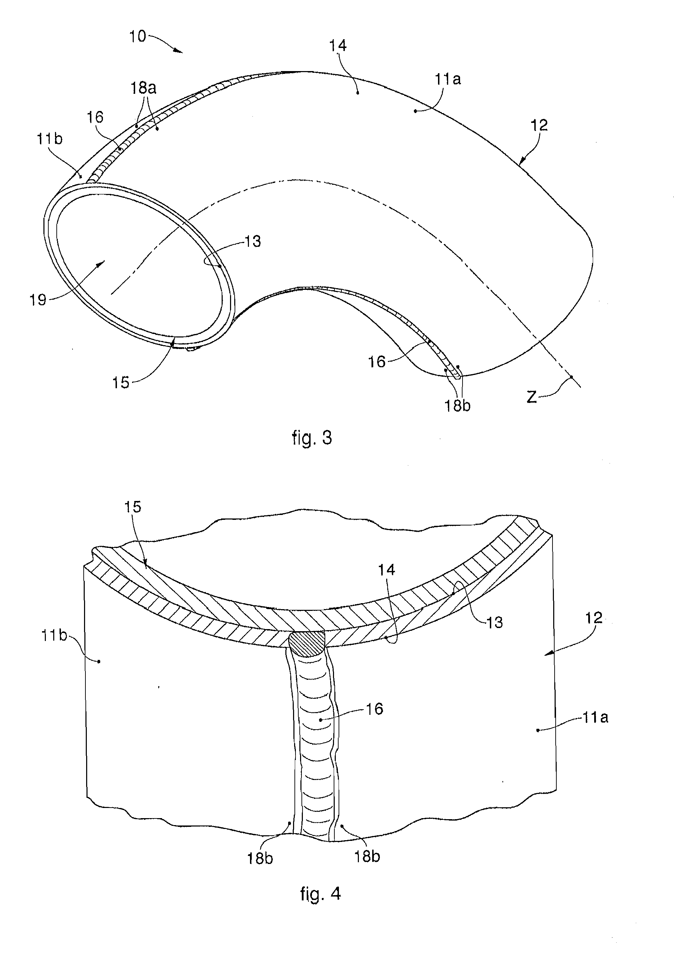

In the form of embodiment shown in figs. 1-3, the first external component 12 has an annular cross section.

Each of the parts 11a, 11b has a cross section with a semi-annular shape and has its respective connection edges 18a, 18b with the other part 11b, 11a in correspondence, respectively with the larger radius of curvature, that is, in correspondence with the extrados of the curved tubular element 10, and the smaller radius of curvature, that is, in correspondence with the intrados of the first external component 12.

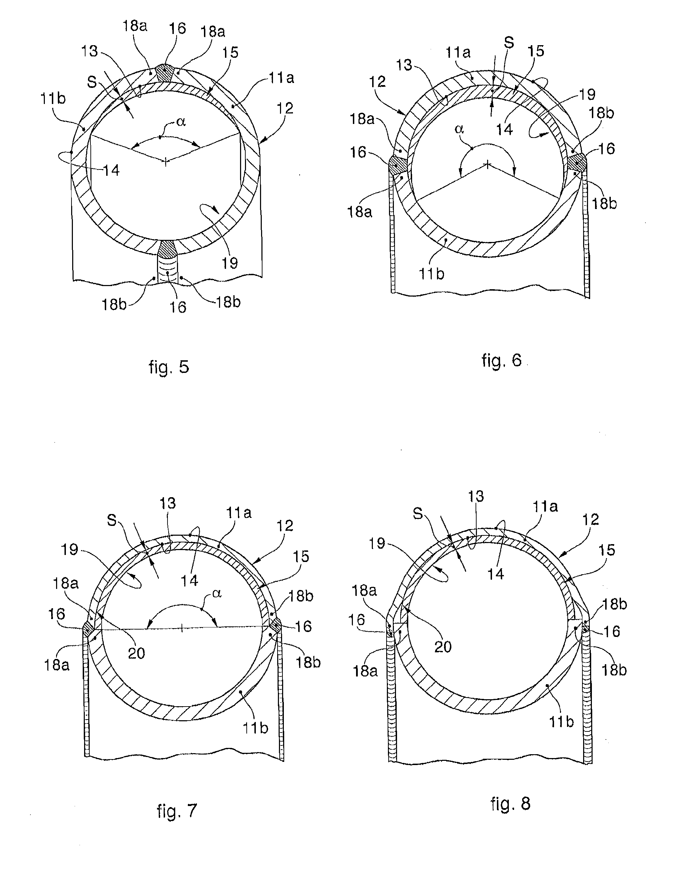

In other forms of embodiment, for example the ones shown in figs. 6 and 7, the parts 11a, 11b have their respective connection edges 18a, 18b disposed in correspondence with the mean radius of the first external component 12.

However, it is not excluded that, in other forms of embodiment, the connection between the parts 11a, 11b occurs in different positions from those shown in figs. 1-7.

In the forms of embodiment in figs. 1-7 the parts 11a and 11b are coupled with the respective connection edges 18a, 18b disposed in contact and facing headwise.

Other forms of embodiment, for example shown in fig. 8, provide that the parts 11a, 11b are coupled with each other, with an at least partial overpositioning or overlap between the connection edges 18a, 18b of the two parts 11a, 11b.

In other forms of embodiment it may be provided that the number of parts that form the first external component 12 is more than two, for example three or four parts.

Some forms of embodiment provide that the parts 11a, 11b are made of metal material, like carbon steel, or light aluminum-based alloys or other materials, for example polymer materials.

Purely by way of example, and not restrictively, the parts 11a, 11b are made of aluminum and define, when coupled, a first external component 12 with an internal diameter of about 125 mm, a thickness of about 7 mm, and a mean radius of curvature R of about 240 mm.

The first external component 12, in the event of an arc of a circle extension, develops along the curved axis Z, for example for an angle comprised between 10° and 210°, in this case about 90°.

The first external component 12 has an internal surface 13 and an external surface 14.

The insert 15 is inserted into the first external component 12, in intimate contact with the internal surface 13 thereof. The insert 15 develops for at least part of the curved extension of the first external component 12 and has a cross section such as to cover at least part of the internal surface 13.

The insert 15 is made in a monolithic and definitive form, in a production process that is autonomous and distinct with respect to that of production of the first external component 12, and is made of a material having greater resistance to wear than that of the material of which the parts 11a, 11b are made.

Some forms of embodiment provide that the insert 15 is made of ceramic materials, high-resistance steels, cast iron, chrome carbides or other types of carbides.

In the form of embodiment shown in figs. 1-3, the insert 15 has a tubular cross section that extends along the curved axis Z and covers the entire internal surface 13 of the first external component 12.

The insert 15 has a substantially uniform thickness in its cross section, although it is not excluded that, in other forms of embodiment, the insert 15 may have a variable thickness, for example greater near the extrados and smaller near the intrados.

Other forms of embodiment, for example those shown in figs. 5-7, provide that the insert 15 has a cross section with an annular sector, that is, it covers only part of the internal surface 13 of the first external component 12. In other words, the insert 15 develops circumferentially for an angle α, less than 360°, for example about 120° (fig. 5), about 240° (fig. 6), or about 180° (fig. 7).

In this case, it is provided that the insert 15 and the internal surface 13 of the first external component 12 not affected by the insert 15 define a cavity 19 for the passage of the abrasive material to be transferred.

Some forms of embodiment of the present invention provide that the insert 15 is disposed inside the first external component 12, substantially in correspondence with its extrados, that is, in correspondence with the bigger radius of curvature of the first external component 12. The extrados of the first external component 12 is subjected during use to a greater erosive effect and the presence of the insert 15 with its properties of resistance to wear in that zone allows to increase the working life of the curved tubular element 10.

In the forms of embodiment in figs. 5 and 6, it is provided that the insert 15 has a thickness S that varies along the circumferential development, assuming a maximum value in proximity to the extrados, that is, at the point of maximum wear, and a minimum value as it moves toward the intrados of the first external component 12.

The variation in thickness S of the insert 15, from the extrados toward the intrados, is gradual and defined so as to obtain a gradual break in continuity between the insert 15 and the internal surface 13 of the first external component 12 and without irregularities In fact, irregularities present in the cavity 19 could increase the phenomena of wear and reduce the working life of the curved tubular element 10.

In the form of embodiment shown in fig. 7, it is provided that the first external component 12 comprises two parts 11a, 11b, one disposed toward the extrados, and the other disposed toward the intrados and both having the same external radius of the cross section.

Part 11a, disposed toward the extrados, has a smaller thickness than that of the intrados, to define with its internal surface 13 a housing seating 20 in which the insert 15 is positioned once the parts 11a, 11b are connected to each other.

The insert 15 disposed inside the housing seating 20 is configured so as to define a continuous and uniform passage cavity 19, circular in shape, for the passage of the abrasive material.

It is advantageous to provide that the welding beads 16 provided for the connection of the parts 11 a, 11b are disposed in correspondence with the zones affected by the presence of the insert 15.

In this way, possible welding burrs, due to the melting of the material of the connection edges 18a, 18b, are covered by the insert 15 and do not generate any discontinuities in the cavity 19, which would promote processes of wear.

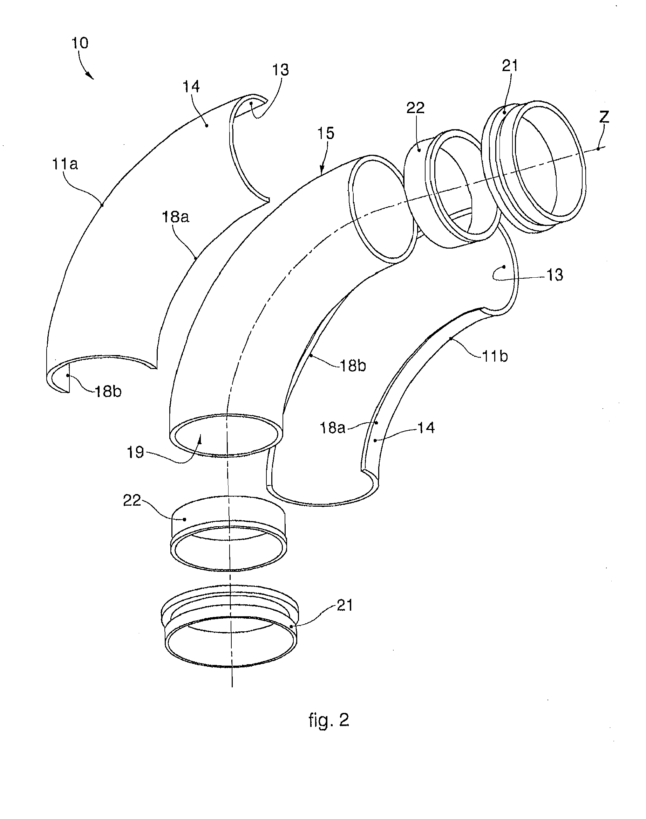

Two flanges 21 (figs. 1 and 2) are associated, for example by welding, to the ends of the first external component 12, in order to connect other pipes.

The flanges 21 can provide a covering ring 22, disposed inside the flanges 21, also made of anti-wear material and disposed without a break in continuity with the insert 15.

Some forms of embodiment provide that the flanges 21 and/or the covering rings 22 are configured to constrain the position of the insert 15 along the curved axis Z.

The method to make the curved tubular element 10 provides to make the first external component 12 and the insert 15.

More specifically, the at least two parts 11a, 11b are made and subsequently brought reciprocally near each other along the respective connection edges 18a, 18b, disposing the insert 15 inside, in the cavity that is defined between the two parts 11a, 11b.

Subsequently, the two parts 11a, 11b are reciprocally welded along the connection edges 18a, 18b, so as to define the first external component 12 and to enclose the insert 15 inside the latter.

Subsequently, other operations can be carried out, such as for example deburring, painting, protective treatments to protect from oxidation or other operations.

Some forms of embodiment provide that the two parts 11a, 11b are made by cold molding, and subsequently reciprocally welded using automated systems, for example served by welding robots.

It is clear that modifications and/or additions of parts may be made to the curved tubular element 10 for transporting concrete and the corresponding method as described heretofore, without departing from the field and scope of the present invention.

It is also clear that, although the present invention has been described with reference to some specific examples, a person of skill in the art shall certainly be able to achieve many other equivalent forms of curved tubular element 10 for transporting concrete and the corresponding method, having the characteristics as set forth in the claims and hence all coming within the field of protection defined thereby.

## Claims

1. Method to make a curved tubular element to convey abrasive materials such as concrete or suchlike, comprising obtaining a first external curved tubular component (12), and a second internal curved component (15) made of a material with a greater resistance to wear than the first external curved tubular component (12), and having a cross section such as to cover at least part of the internal surface (13) of the first external curved tubular component (12), **characterized in that** it comprises:
- making the first external curved tubular component (12) in at least two parts (11a, 11b) in which each of said parts has a cross section which is a respective portion of the complete tubular section of the first external curved tubular component (12),
- making, in a distinct and autonomous production process, said second internal curved component (15) in a monolithic and definitive form;
- disposing said second internal curved component (15) internally in contact with at least one of said two parts (11a, 11b) of the first external curved tubular component (12), and bringing said at least two parts (11a, 11b) near each other along respective connection edges (18a, 18b),
- welding the at least two parts (11 a, 11b) along said connection edges (18a, 18b) to define said first external curved tubular component (12) and to enclose said second internal curved component (15) inside it.

2. Method as in claim 1, **characterized in that** said second internal curved component (15) has a tubular cross section of a shape mating with the whole internal surface (13) of said first external curved tubular component (12).

3. Method as in claim 1, **characterized in that** said second internal curved component (15) has a cross section such as to cover only part of the internal surface (13) of said first external curved tubular component (12).

4. Method as in claim 3, **characterized in that** said second internal curved component (15) is disposed in correspondence to the extrados of said first external curved tubular component (12).

5. Method as in any claim hereinbefore, **characterized in that** said second internal curved component (15) extends for the same curved extension as said first external curved tubular component (12).

6. Method as in any claim hereinbefore, **characterized in that** during welding, welding beads (16) are made, at least one of which is provided in correspondence to said second internal curved component (15).

7. Curved tubular element to convey abrasive materials such as concrete or suchlike, comprising a first external curved tubular component (12), and at least a second internal curved component (15) housed inside the first external curved tubular component (12), with a cross section such as to cover at least part of the internal surface (13) of the first external curved tubular component (12), and made of a material with a greater resistance to wear than that of the first external curved tubular component (12), **characterized in that** said first external curved tubular component (12) comprises at least two parts (11a, 11b) with a curved extension whose cross section is a portion of the tubular section of the first external curved tubular component (12), said second internal curved component (15) is monolithic and obtained in its definitive form in a distinct and autonomous process, said parts (11a, 11b) of the first external curved tubular component (12) being welded to each other along respective connection edges (18a, 18b), after being positioned in contact with the second internal curved component (15), in order to define together the complete tubular section of said first external curved tubular component (12) and to enclose said second internal curved component (15) inside them.

8. Curved tubular element as in claim 7, **characterized in that** said second internal curved component (15) has a cross section such as to cover the whole internal surface (13) of said first external curved tubular component (12).

9. Curved tubular element as in claim 7, **characterized in that** said second internal curved component (15) has a cross section such as to cover only part of the internal surface (13) of said first external curved tubular component (12).

10. Curved tubular element as in claim 9, **characterized in that** said second internal curved component (15) is disposed in correspondence to the extrados of said first external curved tubular component (12).

11. Curved tubular element as in any of the claims from 7 to 10, **characterized in that** said second internal curved component (15) has a variable thickness on the circumference with a maximum value in proximity to the extrados and which diminishes as it moves toward the intrados of said first external curved tubular component (12).

12. Curved tubular element as in any of the claims from 7 to 11, **characterized in that** said connection edges (18a, 18b) are connected along respective welding beads (16), **and in that** at least one of said welding beads (16) is provided in correspondence to said second internal curved component (15).
